Europäisches Patentamt

European Patent Office

Office européen des brevets

(19)

(11) Publication number: **0 321 193 B1**

(12) EUROPEAN PATENT SPECIFICATION

(45) Date of publication of patent specification: **20.04.94**  (51) Int. Cl.5: **C08F 2/44**, C08F 20/12

(21) Application number: **88311804.4**

(22) Date of filing: **14.12.88**

(54) **Process for preparing flowable, stable and hardenable suspensions, and thus-obtained compositions.**

(30) Priority: **17.12.87 IT 2305087**

(43) Date of publication of application:
**21.06.89 Bulletin 89/25**

(45) Publication of the grant of the patent:
**20.04.94 Bulletin 94/16**

(84) Designated Contracting States:
**AT BE CH DE ES FR LI NL SE**

(56) References cited:
**FR-A- 2 503 168**

(73) Proprietor: **ELF ATOCHEM ITALIA S.r.l.**
**Via Gioacchino Murat 17**
**I-20159 Milano(IT)**

(72) Inventor: **Marciandi, Franco**
**10, via Meda**
**I-20017 Rho Milan(IT)**
Inventor: **Giudici, Dario**
**5, via G. Borsi**
**I-20017 Rho Milan(IT)**
Inventor: **Binaghi, Marco**
**43, via Sismondi**
**I-20100 Milan(IT)**

(74) Representative: **Whalley, Kevin et al**
**MARKS & CLERK**
**57/60 Lincoln's Inn Fields**
**London WC2A 3LS (GB)**

EP 0 321 193 B1

**EP 0 321 193 B1**

## Description

The present invention relates to a process for preparing flowable, stable and hardenable suspensions, and to the thus-obtained compositions.

More particularly, the present invention relates to a process of preparing stable suspensions of mineral fillers in acrylic and/or methacrylic monomers, suitable for bulk polymerization.

It is known that suspensions of mineral fillers in polymerizable liquids, having a high stability over the time necessary before being used in the preparation of finished articles by polymerization, can be obtained by using suitable suspending and viscosity-depressing agents.

An Italian patent No. 1,038,488, flowable, stable and hardenable suspensions based on a polymerizable organic liquid and on a particulated inorganic filler are disclosed, which are obtained in the presence of a copolymeric suspending agent (polymeric dispersant) containing in its chain a component solvatable by the hardenable liquid, and at least one group capable of associating with the mineral filler dispersed in the liquid basis.

In order to improve the mechanical properties of the finished articles, to the suspension is added a low-molecular-weight coupling agent, generally a silane, which is capable of forming strong chemical bonds with both the liquid basis and the mineral filler.

As an alternative, processes for preparing the above mentioned compositions have been disclosed, wherein as the viscosity depressants only coupling agents, possibly in admixture with surfactants of the anionic, cationic or non-ionic type, are used.

U.K. Patent Nos. 1,111,603; 1,132,261; and 1,140,542 disclose compositions based on alkyl-methacrylic type monomers, which contain high amounts of finely ground mineral fillers pretreated with a coupling agent selected from the organic derivatives of silicon.

According to the disclosures of these patents, a mineral filler, preferably on a siliceous basis, is treated, before being mixed with the polymerizable liquid monomer, with an organic derivative of silicon containing at least one functional group capable of reacting with the surface of the inorganic filler and at least one functional group capable of copolymerizing with the methacrylic monomer.

The functional group reactive with the mineral filler is preferably a hydrolysable group bonded to the silicon atom and which supposedly reacts with the hydroxy groups bonded to the surface of the inorganic material, in order to form very stable oxygen-bridge bonds.

The thus pre-treated inorganic material is added to the polymerized liquid basis and the obtained composition, to which surfactants are possibly added, in order to improve its flowability, results in a composition stable over time, pourable into moulds, and capable of yielding finished articles having good mechanical properties.

In European patent application No. EP-A-218,866 compositions based on esters of acrylic or methacrylic acid are disclosed, which contain a finely ground mineral filler, wherein the silanization of the above described inorganic material takes place in situ when the mineral filler is added to the polymerizable liquid basis.

According to the disclosure of that patent application, there are added to the polymerizable liquid basis an organic compound of silicon, also capable of polymerizing with the acrylic or methacrylic monomer and of reacting with the inorganic filler, and an alkylamine capable of acting as a catalyst for the above said silicon-organic compound.

However, in order to obtain a composition having good flowability, and therefore suitable for being poured into moulds, the mineral filler should be added to the liquid blend very slowly, in such a way that the viscosity of the obtained composition never exceeds 10 Pa.s.

In German patent application No. 3,531,913, the above mentioned drawback is overcome by adding to the composition an amount of up to 5% by weight of a suitable viscosity-depressing agent, such as soy lecithin.

We have now found that it is possible to prepare stable and flowable (fluid) suspensions of finely ground mineral fillers in a polymerizable liquid, by directly silanizing the inorganic material in situ, but without the drawbacks of the prior art (controlled addition of the mineral filler, or use of soy lecithin), by using particularly efficacious silanization catalysts.

The present invention provides a process for preparing flowable, stable and hardenable suspensions, comprising mixing:

a) a liquid basis, constituted by at least one polymerizable monomer;
b) a finely ground mineral filler;
c) a silanizing agent for the mineral filler; and
d) a hydrolysis catalyst for the silanizing agent, selected from the ammonium salts of organic acids.

2

EP 0 321 193 B1

The polymerizable monomer is preferably selected from the alkyl esters of acrylic or methacrylic acid, wherein the alkyl group contains from 1 to 6 carbon atoms. Examples of such esters are methyl methacrylate (MMA), ethyl methacrylate, propyl methacrylate, butyl methacrylate, methyl acrylate, ethyl acrylate, and butyl acrylate.

Furthermore, as polymerizable monomers, vinylic monomers such as styrene, alpha-methyl-styrene, or acrylonitrile, can be used.

Methyl methacrylate, either alone, or mixed with up to 50% by weight of the above-said monomers, is particularly preferred.

Mineral fillers suitable for use in the process of the present invention are inorganic substances having hydrophilic surfaces characterized by the presence of polar groups, preferably hydroxyl groups, which can react with the silanizing agent or form a hydrogen bridge with the siloxanic groups. Examples of suitable fillers are amorphous or crystalline silica (quartz, cristobalite), glass, alumina, aluminium trihydroxide, calcium carbonate, mineral silicates, aluminosilicates (mica, talc, wollastonite), mineral oxides, such as $Fe_2O_3$, $TiO_2$, $Cr_2O_3$, asbestos, and fibreglass.

The mineral fillers are finely ground both in order to obtain adequate aesthetic and mechanical properties in the finished articles and in order to obtain a proper stability of the suspension.

The particles of the filler should preferably have granular or spheroidal shape; however for particular applications, particles having a different shape, e.g. needle-like, as in case of use of fibreglass, can be used as well.

For particular applications, mixtures of particles of granular or spheroidal shape with particles of needle-like shape can be used.

The average particle diameter is preferably from 0.1 to 50 micrometres, and more preferably from 1 to 20 micrometres. The surface area is generally from 0.5 to 10 $m^2/g$, preferably from 2 to 7 $m^2/g$.

The silanizing agent is an organic derivative of silicon containing hydrolysable groups, and is preferably selected from those having general formula:

$$R_1 Z R_2 Si(OR_3)$$

wherein:

$R_1$     represents a hydrogen atom, an either saturated or unsaturated alkyl, cycloalkyl, or alkylaryl radical or an aryl radical containing from 1 to 20 carbon atoms, optionally substituted with hydroxy, mercapto, amino, epoxy, optionally esterified or amidated carboxyl groups, or a saturated or unsaturated acyl radical containing from 2 to 20 carbon atoms;

$Z$     represents a direct bond or a bivalent radical selected from -O-, -NH-, -S-, $-CH_2-$:

$R_2$     represents a direct bond or an alkylenic, arylenic, optionally alkyl-substituted radical, containing from 1 to 20 carbon atoms;

$R_3$     represents an alkyl, aryl, alkyl-aryl radical containing from 1 to 20 carbon atoms, optionally substituted with alkoxy, alkylamino or alkylmercapto groups, wherein the alkyl group contains from 1 to 12 carbon atoms.

Examples of usable silanes are methyltriethoxysilane, methyltrimethoxysilane, vinyltriethoxysilane, gamma-methacryloxypropyltrimethoxysilane, gamma-methacryloxyloxypropyltris(2-methoxyethoxy)silane, gamma-glycidoxypropyltrimethoxysilane, gamma-mercaptopropyltriethoxysilane, gamma-aminopropyltriethoxysilane, and N-beta(aminoethyl)gamma-amino-propyltrimethoxysilane.

The catalyst of silane hydroylsis is preferably selected from the ammonium salts of organic acids having general formula:

$$R_4 COO^-/NR_5 R_6 R_7 R_8/^+$$

wherein:

$R_4$     represents a hydrogen atom or an optionally unsaturated alkyl, cycloalkyl, or alkylaryl radical or an aryl radical containing from 1 to 20 carbon atoms, and

$R_5$, $R_6$, $R_7$, $R_8$,     which may be the same as or different from each other, may be hydrogen, or alkyl or cycloalkyl radicals containing from 1 to 20 carbon atoms.

Examples of catalysts are isopropylammonium acetate, isopropylammonium methacrylate, ammonium oleate, ammonium stearate, ammonium methacrylate, n-propylammonium methacrylate, dimethylammonium butyrate, isopropylammonium oleate, isopropylammonium benzoate, and ethylammonium acrylate.

The catalyst can be prepared by means of the direct addition of the organic acid to ammonia or to the amine; such a reaction can be carried out separately, or directly in situ in the composition.

3

According to a preferred embodiment of the present invention, to the suspensions there may be also added surface-active agents soluble in the monomer, and with a high enough affinity for the mineral filler. In general, the use of surfactants containing ethoxy or propoxy groups, such as ethoxylated alkylphenols, sulphonate agents, alkyl sulphates, alkylammonium phosphates and phosphonates, wherein the alkyl group contains up to 20 carbon atoms, and phosphoric esters, is advisable.

Examples of surfactants are ethoxylate nonylphenol containing from 1 to 15 molecules of ethylene oxide, ethoxylated octylphenol containing from 1 to 15 molecules of ethylene oxide, ammonium dodecylbenzenesulphonate, sodium 2-ethylhexylsulphosuccinate, double sulphate of ammonium and ethoxylated lauryl alcohol with 1-3 ethylene oxide molecules, $(C_4 C_{12})$-alcohol phosphates, and acid phosphates of stearamidopropyldimethyl-$\beta$-hydroxyethylammonium.

The amount of surfactant is preferably from 0 to 0.5% by weight, more preferably from 0.05 to 0.20% by weight, based on the total mass.

The amount of mineral filler to be used in the compositions of the present invention depends on the desired characteristics of the end articles and on the characteristics of flowability of the suspension.

In general, the use of high percentages of fillers, from 30 to 80% by weight based on the total, is preferred. As an example, in the case of siliceous fillers, it is better to work with concentrations higher than 50% by weight. Correspondingly, percentages of from 70 to 20% by weight of the polymerizable monomer, or monomer mixture, are generally used.

The silanizing agent is preferably used at concentrations from 0.01 to 2%, more preferably from 0.05 to 0.1%, by weight, based on the filler.

The catalyst is preferably used at concentrations from 0.01 to 1%, more preferably from 0.01 to 0.5%, by weight, based on the total composition.

Besides the above listed compounds, to the suspensions other compounds may be possibly added, such as:

1) mono-, or bi-, or polyfunctional monomers soluble in the main monomer and copolymerizable with it, e.g. ethyleneglycol dimethacrylate, triethyleneglycol dimethacrylate, tetraethyleneglycol dimethacrylate, pentaerythritol tetraacrylate, and divinylbenzene, the amounts thereof being from 0 to 2% by weight, based on the total composition:

2) pigments and/or inorganic and/or organic dyes, the amounts thereof being from 0 to 5% by weight based on the total composition;

3) mould-release agents, antistatic agents, plasticizers, anti-U.V. agents, antioxidants, polymerization inhibitors, in amount from 0 to 2% by weight, based on the total composition.

The stable compositions of the present invention can be prepared within short times and at room temperature, have a low viscosity which depends on the filler content and granulometry, but which is generally from 0.01 to 0.3 Pa.s, and are easily redispersable after a long storage.

The viscosity of the suspension can be furthermore increased, and adjusted at an optimum level for injection moulding or for bulk polymerizatrion by means of the addition of well-known viscosity modifiers, such as methacrylic or vinylic homo- and/or copolymers.

In order to obtain considerable viscosity changes with a small addition of the modifier, high-molecular-weight modifiers are advantageously used.

Polymers or copolymers having an average molecular weight (Mw) comprised within the range of from 20,000 to 1,000,000, more preferably of from 50,000 to 500,000, are the most commonly used ones.

Examples of polymers to be used as viscosity modifiers are polymethylmethacrylate, methylmethacrylatemethylacrylate copolymers, methylmethacrylate-styrene copolymers, methylmethacrylate-butylacrylate copolymers, polyethylmethacrylate, methylmethacrylate-methacryloxypropyltrimethoxysilane copolymers, polystyrene, and poly-alpha-methylstyrene.

The amount of the polymeric modifier to be used also depends, partially, on the molecular weight thereof. In general, additions of up to 20% by weight based on the monomer, more preferably of from 0.05 to 10%, are advisable.

The manner of carrying out the process of the present invention is of a conventional type; e.g., a ball mill can be used, the reactants being charged all at once, or at successive times, the mill being kept running until fluidization occurs.

According to a different technique, the suspensions can be obtained by loading the components into a reactor, then submitting them to a slow stirring, and subsequently to a fast stirring, until fluidization occurs.

The transformation into finished articles of the compositions of the present invention can take place by moulding under a pressure of from 1 to 4 atmospheres, and at a temperature from 70 to 100°C in case of sealed moulds, an amount of a peroxidic catalyst (e.g.benzoylperoxide or tert-butylcyclohexylperoxycarbonate) being preliminarily added, in an amount from 0.1 to 2%, preferably 0.2 to 0.7%, by weight, and with the possible preliminary addition of mould-release agents, such as stearic acid and glycerol monostearate.

Before being moulded, the suspension is advantageously deaerated, by being submitted to a reduced pressure under stirring.

By using milder polymerization conditions and proper thermal cycles, the suspension can be polymerized by means of techniques similar to those used for manufacturing cast methacrylic sheets, or for preparing articles according to roto-moulding technology.

The invention in another aspect provides a flowable, stable and hardenable composition, comprising:

a) a liquid basis constituted by at least one polymerizable monomer;

b) a finely ground mineral filler;

c) a silanizing agent for the mineral filler; and

d) a hydrolysis catalyst for the silanizing agent, selected from the ammonium salts of organic acids.

According to a preferred method of carrying out the process of the invention, there are effected the following steps.

1. There is charged into a ball mill the mineral filler (e.g. cristobalite) and a methyl methacrylate/methyl acrylate (98:2) copolymer such as that sold under the Trade-Name VEDRIL®.

2. Theres is charged into the mill a liquid component, comprising the polymerizable monomer, preferably methyl methacrylate; a polymerization inhibitor, such as that sold under the Trade-Name TOPANOL®; and a curing agent, such as tetraethyleneglycoldimethacrylate.

3. There is charged into the mill a silane, such as gamma-methacryloxypropyl-trimethoxysilane.

4. The mill is rotated overnight, for about 18 hours, to obtain a viscous paste.

5. There is added to the resulting paste, in the mill, a catalyst, such as isopropyl ammonium oleate; and a colouring component, suitably comprising a pigment (such as $TiO_2$), an organic liquid carrier (dibutyl phthalate) and a small amount of a conventional non-ionic surfactant (a polyethoxylated nonyl phenol containing on average 9 mols of ethylene oxide per mol).

6. The mill is rotated to complete the reaction, during about 6 hours, to obtain the final product.

The invention will be further described with reference to the following illustrative Examples.


EXAMPLE 1

Into a 5 litre porcelain mill, containing ceramic balls of 30 mm diameter for a total actual volume of 1.2 litres, were charged 615 g of methylmethacrylate (MMA) containing 200 ppm of Topanol A (2,4-dimethyl-6-tert.-butylphenol) as the inhibitor; 6 g of ethyleneglycol dimethacrylate; 21 g of gamma-methacryloxypropyl-trimethoxysilane; 5 g of isopropylammonium oleate; and 1500 g of cristobalitic silica having an average granulometry of approximately 6 micrometres and a surface area of 3.5 $m^2$/g.

The mill was revolved for 5 hours at a revolution speed of approximately 25 rpm, and the obtained suspension had a viscosity of 0.038 Pa.s. 70 g of $TiO_2$-based dyeing paste (80% by weight of $TiO_2$, 15% by weight of dibutyl phthalate, 5% by weight of nonylphenol ethoxylated with 9 mol of ethyleneoxide) and 45 g of MMA-ethyl acrylate copolymer (98/2 ratio by weight, average molecular weight 100,000) were added in the mill to 2,000 g of the above suspension.

The mill was allowed to revolve for a further 6 hours, and was then discharged. The suspension was a flowing fluid, with a viscosity of 0.25 Pa.s. (as measured by Brookfield Viscometer LVT4, rotor No. 2) at the discharge point, and of 0.17 Pa.s. after 24-hour standing.

The viscosity of the suspension was measured again after a 3-month storage at room temperature. For such purpose, the suspension was homogenized again by tumbling the container for approximately 6 hours; the viscosity was found to be equal to the original value (0.15 Pa.s).

To the suspension were added 0.6% by weight of Perkadox 16® (bis-4-tert.-butylcyclohexylperoxydicarbonate), and 0.15% of stearic acid, the suspension was stirred up to complete solution and homogenization, and deaerated under reduced pressure for 10 minutes and poured between two crystal plates.

The resulting sandwich was plunged into a water bath at 85 °C for 30 minutes, in order to carry out the polymerization.

A polymerized slab of 200 $cm^2$, and of 3 mm thickness, was obtained, with glossy surface and free from cracks or other faults. From the slab, specimens were obtained for the evaluation of the mechanical and physical characteristics. The results were the following.

| Test | Method | Results |
|---|---|---|
| Specific Gravity | - | 1.8 Kg/dm$^3$ |
| Rockwell Surface Hardness-B Scale | ASTM D 785 | 98 |
| Flexural Modulus | ASTM D 790 | 16.880 MN/m$^2$ |
| Mechanics of Fracture on Pendulum (Kic) | - | 1.6 MN/m$^{3/2}$ |
| Gloss at 85° | ASTM D 523 | 96% |
| White Index | - | amber 84.9 blue 85.0 green 85.5 |

The White Index was measured by a Photovolt Model 60 type apparatus manufactured by Photovolt, with ultra-pure magnesium oxide being used as the reference.

The method adopted for measuring Kic according to the Mechanics of Fracture on Pendulum was based on principles applied in the evaluation of the tenacity of composite materials (ASTM STP 410 - William F. Brown Jr. and John E. Srawly 1966, page 13). The evaluation technique was so set up, as to measure the tenacity at high speed of the test, under extremely critical conditions of notch sharpness, such as can occur in manufactured articles in correspondence of faults.

The test was carried out on specimens 3 mm in thickness (B), 6 mm in width (W) and 60 mm in length.

The depth of the sharp notch (a), realized with a normal razor-blade, was 2.5 mm, and the distance from the supports was 48 mm. The thus-obtained specimens were submitted to an impact at a speed of 0.5 m/second.

The Kic values were computed on the basis of the equation:

$$Kic = Y o C \underline{a}$$

wherein $\underline{a}$ is the depth of the notch, $Y$ is the geometric factor (ASTM STP 410) and

$$o C = 3/2 \underline{Fr.s}$$

(s = distance between the supports; Fr = break point).

EXAMPLE 2

To the mill of Example 1 were charged 650 g of MMA containing 200 ppm of Topanol A; 12 g of ethyleneglycol dimethacrylate; 48 g of gamma-methacryloxypropyltrimethoxysilane; 2.38 g of isopropylammonium methacrylate; and 1,680 g of cristobalitic silica, having the same characteristics as of that of Example 1.

The mill was revolved for 1 hour at a speed of approximately 25 rpm and the obtained suspension had a viscosity of 0.05 Pa.s.

For comparative purposes, a similar suspension was prepared, but without the ammonium salt; after 5 hours of tumbling, the composition had a viscosity higher than 10 Pa.s, with a thixotropic behaviour. After a further 3 hours, the suspension has a viscosity of 0.45 Pa.s, which dropped to 0.12 Pa.s after 24 hours of tumbling.

EXAMPLE 3

To the mill of Example 1 where charged 650 g of MMA stabilized with 200 ppm of Topanol A; 15 g of tetraethyleneglycoldimethacrylate; 4.6 g of gamma-methacryloxypropyltrimethoxysilane; 40 g of MMA-methyl acrylate copolymer, with a weight ratio of 98/2 and average molecular weight 100,000; and 1,700 g of cristobalitic silica.

The mill was tumbled for 10 hours, and then to the mixture were added 10 g of methylmethacrylate; 80 g of TiO$_2$ paste having the same characteristics as reported in Example 1; and 2.5 g of isopropylammonium methacrylate. After 4 hours of tumbling, the viscosity of the suspension was 0.3 Pa.s.

EXAMPLE 4

The test were run according to the same manner as described in Example 3, except that the ammonium salt was prepared in situ, by adding 1.5 g of methacrylic acid and 1.029 g of isopropylamine.

The end viscosity, after 4 hours of tumbling, was 0.3 Pa.s.

**Claims**

1. A process for preparing flowable, stable and hardenable suspensions, comprising mixing:
   a) a liquid basis constituted by at least one polymerizable monomer;
   b) a finely ground mineral filler;
   c) a silanizing agent for the mineral filler; and
   d) a hydrolysis catalyst of the silanizing agent, selected from the ammonium salts of organic acids.

2. A process as claimed in claim 1, wherein the polymerizable monomer is at least one alkyl ester of acrylic or methacrylic acid, wherein the alkyl group contains from 1 to 6 carbon atoms.

3. A process as claimed in claim 2, wherein the polymerizable monomer is selected from methyl methacrylate, ethyl methacrylate, propyl methacrylate, butyl methacrylate, methyl acrylate, ethyl acrylate, and butyl acrylate.

4. A process as claimed in any of claims 1 to 3, wherein the polymerizable monomer is methyl methacrylate, either alone or admixed with up to 50% by weight of one or more other monomers.

5. A process as claimed in claim 1, wherein the polymerizable monomer is a vinylic monomer such as styrene, alpha-methyl-styrene, or acrylonitrile.

6. A process as claimed in any of claims 1 to 5, wherein the mineral filler is at least one inorganic substance having a hydrophilic surface containing polar groups capable of reacting with the silanizing agent, or of forming hydrogen bridges with siloxanic groups and having particle diameter from 0.1 to 50 micrometres and a surface area from 0.5 to 10 $m^2$/g.

7. A process as claimed in claim 6, wherein the mineral filler has particle diameter from 1 to 20 micrometres and a surface area from 2 to 7 $m^2$/g.

8. A process as claimed in claim 6 or 7, wherein the mineral filler is selected from one or more amorphous or crystalline silica, glass, alumina, aluminium trihydroxide, calcium carbonate, mineral silicates, alumino-silicates, mineral oxides, such as $Fe_2O_3$, $TiO_2$, $Cr_2O_3$, asbestos, and fibreglass.

9. A process as claimed in any of claims 1 to 8, wherein the amount of mineral filler is from 30 to 80% based on the total composition.

10. A process as claimed in any of claims 1 to 9, where the silanizing agent is an organic derivative of silicon containing hydrolysable groups, and is selected from those having general formula:

$R_1ZR_2Si(OR_3)$

wherein:
   - $R_1$ represents a hydrogen atom, a saturated or unsaturated alkyl, cycloalkyl, or alkylaryl radical, an aryl radical containing from 1 to 20 carbon atoms, optionally substituted with hydroxy, mercapto, amino, epoxy, optionally esterified or amidated carboxyl groups, or a saturated or unsaturated acyl radical containing from 2 to 20 carbon atoms;
   - $Z$ represents a direct bond or a bivalent radical selected from -O-, -NH-, -S-, -$CH_2$-;
   - $R_2$ represents a direct bond or an alkylenic, arylenic, optionally alkyl-substituted radical, containing from 1 to 20 carbon atoms;
   - $R_3$ represents an alkyl, aryl, or alkyl-aryl radical containing from 1 to 20 carbon atoms, optionally substituted by alkoxy, alkylamino or alkylmercapto groups, wherein the alkyl group contains from 1 to 12 carbon atoms.

**11.** A process as claimed in claim 10, wherein the silanizing agent is selected from methyltriethoxysilane, methyltrimethoxysilane, vinyltriethoxysilane, gamma-methacryloxypropyltrimethoxysilane, gamma-methacryloxyloxypropyltris(2-methoxyethoxy)silane, gamma-glycidoxypropyltrimethoxysilane, gamma-mercaptopropyltriethoxysilane, gamma-aminopropyltriethoxysilane, and N-beta(aminoethyl)gamma-amino-propyltrimethoxysilane.

**12.** A process as claimed in any of claims 1 to 11, wherein the silanizing agent is used at a concentration from 0.01 to 2%, and preferably from 0.05 to 1%, by weight based on the loaded material.

**13.** A process as claimed in any of claims 1 to 12, wherein the catalyst for silane hydrolysis is selected from the ammonium salts of organic acids having general formula;

$$R_4 COO^-/NR_5 R_6 R_7 R_8/^+$$

wherein:
- $R_4$ represents a hydrogen atom or an optionally unsaturated alkyl, cycloalkyl, or alkylaryl radical, or an aryl radical containing from 1 to 20 carbon atoms, and
- $R_5$, $R_6$, $R_7$, $R_8$, which may be the same as or different from each other, may be hydrogen, or alkyl or cycloalkyl radicals containing from 1 to 20 carbon atoms

**14.** A process as claimed in claim 13, wherein the catalyst is selected from isopropylammonium acetate, isopropylammonium methacrylate, ammonium oleate, ammonium stearate, ammonium methacrylate, n-propylammonium methacrylate, dimethylammonium butyrate, isopropylammonium oleate, isopropylammonium benzoate, and ethylammonium acrylate.

**15.** A process as claimed in any of claims 1 to 14, wherein the amount of catalyst is from 0.01 to 1%, preferably from 0.01 to 0.5%, by weight based on the total composition.

**16.** A process as claimed in any of claims 1 to 15, wherein a surface-active agent containing ethoxy or propoxy groups is added to the composition.

**17.** A process as claimed in claim 16, wherein the surface-active agent is selected from ethoxylated alkylphenols, sulphonated agents, alkyl sulphates, alkylammonium phosphates and phosphonates, and phosphoric esters.

**18.** A process as claimed in any of claims 1 to 17, wherein the amount of surface-active agent is from 0 to 0.5%, preferably from 0.05 to 0.2%, by weight based on the total mass.

**19.** A flowable, stable and hardenable composition, obtained from:
a) a liquid basis constituted by at least one polymerizable monomer;
b) a finely ground mineral filler;
c) a silanizing agent for the mineral filler; and
d) a hydrolysis catalyst for the silanizing agent, selected from the ammonium salts of organic acids.

**20.** A composition as claimed in claim 19, having a viscosity from 0.01 to 0.3 Pa.s.

**21.** A composition comprising the product of the process as claimed in any of claims 1 to 18.

**22.** A shaped article, manufactured by pouring and cross-linking in a mould a composition as claimed in any of claims 19 to 21.

**Patentansprüche**

**1.** Verfahren zur Herstellung von fließfähigen, stabilen und härtbaren Suspensionen, bei dem
a) eine flüssige Basis, welche aus wenigstens einem polymerisierbaren Monomeren besteht;
b) ein fein gemahlener mineralischer Füllstoff;
c) ein Silanisierungsmittel für den mineralischen Füllstoff; und

d) ein Hydrolysekatalysator für das Silanisierungsmittel, welcher aus den Ammoniumsalzen organischer Säuren ausgewählt wird,

vermischt werden.

2. Verfahren nach Anspruch 1, wobei das polymerisierbare Monomere wenigstens ein Alkylester einer Acryl- oder Methacrylsäure ist, wobei die Alkylgruppe 1 bis 6 Kohlenstoffatome enthält.

3. Verfahren nach Anspruch 2, wobei das polymerisierbare Monomere ausgewählt wird aus Methylmethacrylat, Ethylmethacrylat, Propylmethacrylat, Butylmethacrylat, Methylacrylat, Ethylacrylat und Butylacrylat.

4. Verfahren nach einem der Ansprüche 1 bis 3, wobei das polymerisierbare Monomere Methylmethacrylat entweder allein oder vermischt mit bis zu 50 Gewichtsprozent eines oder mehrerer anderer Monomere ist.

5. Verfahren nach Anspruch 1, wobei das polymerisierbare Monomere ein Vinylmonomeres, wie Styrol, alpha-Methylstyrol oder Acrylnitril ist.

6. Verfahren nach einem der Ansprüche 1 bis 5, wobei der mineralische Füllstoff wenigstens ein anorganischer Stoff ist, der eine hydrophile Oberfläche aufweist, welche polare Gruppen enthält, die in der Lage sind mit dem Silanisierungsmittel zu reagieren oder Wasserstoffbrücken mit Siloxan-Gruppen zu bilden, und einen Teilchendurchmesser von 0,5 bis 50 Mikrometer und der eine spezifische Oberfläche von 0,5 bis 10 $m^2$/g aufweist.

7. Verfahren nach Anspruch 6, wobei der mineralische Füllstoff einen Teilchendurchmesser von 1 bis 20 Mikrometer und eine spezifische Oberfläche von 2 bis 7 $m^2$/g aufweist.

8. Verfahren nach Anspruch 6 oder 7, wobei der mineralische Füllstoff ausgewählt wird aus einem oder mehreren von amorphem oder kristallinem Siliziumdioxid, Glas, Aluminiumoxid, Aluminiumtrihydroxid, Calciumcarbonat, mineralischen Silikaten, Alumino-Silikaten, Mineraloxiden, wie $Fe_2O_3$, $TiO_2$, $Cr_2O_3$, Asbest und Glasfaser.

9. Verfahren nach einem der Ansprüche 1 bis 8, wobei die Menge des mineralischen Füllstoffs 30 bis 80 %, bezogen auf die Gesamtzusammensetzung, beträgt.

10. Verfahren nach einem der Ansprüche 1 bis 9, wobei das Silanisierungsmittel ein organisches Siliziumderivat ist, welches hydrolisierbare Gruppen enthält und aus denjenigen mit der allgemeinen Formel

$R_1 Z R_2 Si(OR_3)$

ausgewählt ist, worin:
- $R_1$ ein Wasserstoffatom, ein gesättigtes oder ungesättigtes Alkyl-, Cycloalkyl- oder Alkylaryl-Radikal, ein Aryl-Radikal mit 1 bis 20 Kohlenstoffatomen, gegebenenfalls substituiert mit Hydroxy, Mercapto, Amino, Epoxy, gegebenenfalls mit veresterten oder amidierten Carboxyl-Gruppen, oder ein gesättigtes oder ungesättigtes Acyl-Radikal mit 2 bis 20 Kohlenstoffatomen darstellt;
- Z eine direkte Bindung oder ein zweiwertiges Radikal, vorzugsweise ausgewählt aus -O-,-NH-, -S-, $CH_2$-darstellt;
- $R_2$ eine direkte Bindung oder ein gegebenenfalls Alkylsubstituiertes Alkylen- oder Arylen-Radikal mit 1 bis 20 Kohlenstoffatomen darstellt;
- $R_3$ ein Alkyl-, Aryl- oder Alkylaryl-Radikal mit 1 bis 20 Kohlenstoffatomen, gegebenenfalls durch Alkoxy-, Alkylamino- oder Alkylmercapto-Gruppen substituiert, darstellt, wobei die Alkyl-Gruppe 1 bis 12 Kohlenstoffatome enthält.

11. Verfahren nach Anspruch 10, wobei das Silanisierungsmittel ausgewählt wird aus Methyltriethoxysilan, Methyltrimethoxysilan, Vinyltriethoxysilan, gamma-Methacryloxypropyltrimethoxysilan, gamma-Methacryloxypropyltris(2-methoxyethoxy)-silan, gamma-Glycidoxypropyltrimethoxysilan, gamma-Mercaptopropyltriethoxysilan, gamma-Aminopropyltriethoxysilan und N-beta(Aminoethyl)gamma-aminopropyltrimethoxysilan.

**12.** Verfahren nach einem der Ansprüche 1 bis 11, wobei das Silanisierungsmittel in einer Konzentration von 0,01 bis 2 Gewichtsprozent, vorzugsweise 0,05 bis 1 Gewichtsprozent, bezogen auf das gefüllte Material, verwendet wird.

**13.** Verfahren nach einem der Ansprüche 1 bis 12, wobei der Katalysator für die Silan-Hydrolyse ausgewählt wird aus den Ammoniumsalzen organischer Säuren mit folgender allgemeiner Formel

$$R_4 COO^- / NR_5 R_6 R_7 R_8 /^+$$

worin
- $R_4$ ein Wasserstoffatom oder ein gegebenenfalls ungesättigtes Alkyl-, Cycloalkyl- oder Alkylaryl-Radikal oder ein Aryl-Radikal mit 1 bis 20 Kohlenstoffatomen darstellt, und
- $R_5$, $R_6$, $R_7$, $R_8$, welche gleich oder verschieden sein können, Wasserstoff oder Alkyl- oder Cycloalkyl-Radikale mit 1 bis 20 Kohlenstoffatomen sein können.

**14.** Verfahren nach Anspruch 13, wobei der Katalysator ausgewählt wird aus Isopropylammoniumacetat, Isopropylammoniummethacrylat, Ammoniumoleat, Ammoniumstearat, Ammoniummethacrylat, n-Propylammoniummethacrylat, Dimethylammoniumbutyrat, Isopropylammoniumoleat, Isopropylammoniumbenzoat und Ethylammoniumacrylat.

**15.** Verfahren nach einem der Ansprüche 1 bis 14, wobei die Menge des Katalysators 0,01 bis 1 Gewichtsprozent, vorzugsweise 0,01 bis 0,5 Gewichtsprozent, bezogen auf die Gesamtzusammensetzung, beträgt.

**16.** Verfahren nach einem der Ansprüche 1 bis 15, wobei ein oberflächenaktives Mittel, welches Ethoxy- oder Propoxy-Gruppen enthält, zu der Zusammensetzung gegeben wird.

**17.** Verfahren nach Anspruch 16, wobei das oberflächenaktive Mittel ausgewählt wird aus ethoxylierten Alkylphenolen, sulfonierten Mitteln, Alkylsulfaten, Alkylammoniumphosphaten und -phosphonaten sowie Phosphorsäureestern.

**18.** Verfahren nach einem der Ansprüche 1 bis 17, wobei die Menge des oberflächenaktiven Mittels 0 bis 0,5 Gewichtsprozent, vorzugsweise 0,05 bis 0,2 Gewichtsprozent, bezogen auf die Gesamtmasse, beträgt.

**19.** Fließfähige, stabile und härtbare Zusammensetzung, erhalten aus:
a) einer flüssigen Basis, welche aus wenigstens einem polymerisierbaren Monomeren gebildet wird;
b) einem fein gemahlenen mineralischen Füllstoff;
c) einem Silanisierungsmittel für den mineralischen Füllstoff; und
d) einem Hydrolysekatalysator für das Silanisierungsmittel, ausgewählt aus den Ammoniumsalzen von organischen Säuren.

**20.** Zusammensetzung nach Anspruch 19, welche eine Viskosität von 0,01 bis 0,3 Pascalsekunde aufweist.

**21.** Zusammensetzung, welche das Produkt des Verfahrens nach einem der Ansprüche 1 bis 18 umfaßt.

**22.** Geformter Gegenstand, hergestellt durch Gießen und Vernetzen einer Zusammensetzung nach einem der Ansprüche 19 bis 21 in einer Form.

**Revendications**

**1.** Procédé de préparation de suspensions capables de s'écouler, stables et durcissables, comprenant le mélange de :
(a) une base liquide, constituée par au moins un monomère polymérisable ;
(b) une charge minérale finement broyée ;
(c) un agent silanisant pour la charge minérale ; et
(d) un catalyseur d'hydrolyse pour l'agent silanisant, choisi parmi les sels d'ammonium d'acides organiques.

2. Procédé selon la revendication 1, dans lequel le monomère polymérisable est au moins un ester alkylique de l'acide acrylique ou méthacrylique, dans lequel le groupe alkyle contient de 1 à 6 atomes de carbone.

3. Procédé selon la revendication 2, dans lequel le monomère polymérisable est choisi parmi le méthacrylate de méthyle, le méthacrylate d'éthyle, le méthacrylate de propyle, le méthacrylate de butyle, l'acrylate de méthyle, l'acrylate d'éthyle et l'acrylate de butyle.

4. Procédé selon l'une des revendications 1 à 3, dans lequel le monomère polymérisable est le méthacrylate de méthyle, soit seul, soit en mélange avec une quantité allant jusqu'à 50% en poids d'un ou plusieurs autres monomères.

5. Procédé selon la revendication 1, dans lequel le monomère polymérisable est un monomère vinylique, tel que le styrène, l'alpha-méthyl-styrène ou l'acrylonitrile.

6. Procédé selon l'une des revendications 1 à 5, dans lequel la charge minérale est au moins une substance inorganique ayant une surface hydrophile contenant des groupes polaires capables de réagir avec l'agent silanisant, ou de former des ponts hydrogène avec des groupes siloxaniques, et ayant un diamètre de particule de 0,1 à 50 microns et une surface spécifique de 0,5 à 10 $m^2/g$.

7. Procédé selon la revendication 6, dans lequel la charge minérale a un diamètre de particule de 1 à 20 microns et une surface spécifique de 2 à 7 $m^2/g$.

8. Procédé selon l'une des revendications 6 ou 7, dans lequel la charge minérale est au moins l'une parmi la silice amorphe ou cristalline, le verre, l'alumine, le trihydroxyde d'aluminium, le carbonate de calcium, les silicates minéraux, les alumino-silicates, les oxydes minéraux tels que $Fe_2O_3$, $TiO_2$, $Cr_2O_3$, l'amiante et la fibre de verre.

9. Procédé selon l'une des revendications 1 à 8, dans lequel la quantité de charge minérale est de 30 à 80% sur la base de la composition totale.

10. Procédé selon l'une des revendications 1 à 9, dans lequel l'agent silanisant est un dérivé organique de silicium contenant des groupes hydrolysables, et est choisi parmi ceux représentés par la formule générale :

$R_1 Z R_2 Si(OR_3)$

dans laquelle :
- $R_1$ représente un atome d'hydrogène, un radical alkyle, cycloalkyle ou alkylaryle, saturé ou insaturé, un radical aryle, contenant de 1 à 20 atomes de carbone, facultativement substitués par des groupes hydroxy, mercapto, amino, époxy, carboxyle facultativement estérifié ou amidé, ou bien un radical acyle, saturé ou insaturé, contenant de 2 à 20 atomes de carbone ;
- Z représente une liaison directe ou un radical bivalent, de préférence choisi parmi -O-, -NH-, -S-, $-CH_2-$ ;
- $R_2$ représente une liaison directe ou un radical alcylénique, arylénique, facultativement substitué par alkyle, contenant de 1 à 20 atomes de carbone ;
- $R_3$ représente un radical alkyle, aryle ou alkyl-aryle, contenant de 1 à 20 atomes de carbone, facultativement substitué par des groupes alcoxy, alkylamino ou alkylmercapto, dans lesquels le groupe alkyle contient de 1 à 12 atomes de carbone.

11. Procédé selon la revendication 10, dans lequel l'agent silanisant est choisi parmi le méthyltriéthoxysilane, le méthyltriméthoxysilane, le vinyltriéthoxysilane, le gamma-méthacryloxypropyltriméthoxysilane, le gamma-méthacryloxypropyltris(2-méthoxyéthoxy)silane, le gamma-glycidoxypropyltriméthoxysilane, le gamma-mercaptopropyltriéthoxysilane, le gamma-aminopropyltriéthoxysilane, et le N-bêta(aminoéthyl)-gamma-amino-propyltriméthoxysilane.

12. Procédé selon l'une des revendications 1 à 11, dans lequel l'agent silanisant est utilisé à une concentration de 0,01 à 2%, et, de préférence, de 0,05 à 1%, en poids, sur la base de la matière chargée.

13. Procédé selon l'une des revendications 1 à 12, dans lequel le catalyseur pour l'hydrolyse du silane est choisi parmi les sels d'ammonium d'acides organiques, représentés par la formule générale :

$$R_4 COO^-/NR_5 R_6 R_7 R_8/^+$$

dans laquelle :
- R$_4$ représente un atome d'hydrogène ou un radical alkyle, cycloalkyle ou alkylaryle, facultativement insaturé, ou un radical aryle, contenant de 1 à 20 atomes de carbone, et
- R$_5$, R$_6$, R$_7$, R$_8$, qui peuvent être identiques ou différents les uns des autres, peuvent représenter hydrogène, ou des radicaux alkyle ou cycloalkyle, contenant de 1 à 20 atomes de carbone.

14. Procédé selon la revendication 13, dans lequel le catalyseur est choisi parmi l'acétate d'isopropylammonium, le méthacrylate d'isopropylammonium, l'oléate d'ammonium, le stéarate d'ammonium, le méthacrylate d'ammonium, le méthacrylate de n-propylammonium, le butyrate de diméthylammonium, l'oléate d'isopropylammonium, le benzoate d'isopropylammonium et l'acrylate d'éthylammonium.

15. Procédé selon l'une des revendications 1 à 14, dans lequel la quantité de catalyseur est de 0,01 à 1%, de préférence de 0,01 à 0,5%, en poids, sur la base de la composition totale.

16. Procédé selon l'une des revendications 1 à 15, dans lequel un agent tensio-actif contenant des groupes éthoxy ou propoxy est ajouté à la composition.

17. Procédé selon la revendication 16, dans lequel l'agent tensio-actif est choisi parmi les alkylphénols éthoxylés, les agents sulfonés, les alkyl sulfates, les phosphates et phosphonates d'alkylammonium, et les esters phosphoriques.

18. Procédé selon l'une des revendications 1 à 17, dans lequel la quantité d'agent tensio-actif est de 0 à 0,5%, de préférence de 0,05 à 0,2%, en poids, sur la base de la masse totale.

19. Composition capable de s'écouler, stable et durcissable, obtenue à partir de :
    (a) une base liquide constituée par au moins un monomère polymérisable ;
    (b) une charge minérale finement broyée ;
    (c) un agent silanisant pour la charge minérale ; et
    (d) un catalyseur d'hydrolyse pour l'agent silanisant, choisi parmi les sels d'ammonium d'acides organiques.

20. Composition selon la revendication 19, ayant une viscosité de 0,01 à 0,3 Pa.s.

21. Composition comprenant le produit du procédé tel que défini à l'une des revendications 1 à 18.

22. Article façonné, fabriqué par les opérations consistant à verser et réticuler dans un moule une composition telle que définie à l'une des revendications 19 à 21.